# EUROPEAN PATENT SPECIFICATION

(11) **EP 2 632 699 B1**
(45) Date of publication and mention of the grant of the patent: **07.12.2016**
(21) Application number: 11784751.7
(22) Date of filing: 26.10.2011
(51) Int. Cl.: B29C 70/60, H01Q 17/00, B29L 31/08, B29C 44/04, B29C 44/06, B32B 3/30, B32B 5/16, B32B 5/18, B32B 7/02, F03D 1/06

(54) **IMPROVEMENTS IN OR RELATING TO COMPOSITE STRUCTURES**
VERBESSERUNGEN AN ODER IM ZUSAMMENHANG MIT VERBUNDSTRUKTUREN
AMÉLIORATIONS APPORTÉES À DES STRUCTURES COMPOSITES

(30) Priority: 26.10.2010 GB 201018082
(43) Date of publication of application: 04.09.2013
(73) Proprietor: Vestas Wind Systems A/S, 8200 Aarhus N (DK)
(72) Inventor: APPLETON, Steve, Hampshire GU52 7LU (GB); FORREST, Mark, East Cowes Isle of Wight PO32 6LG (GB)
(74) Representative: Vestas Patents Department
(86) International application number: PCT/GB2011/052076
(87) International publication number: WO 2012/056231

(56) References cited:
- EP-A1- 1 930 364
- EP-A2- 0 742 095
- FR-A1- 2 748 719
- US-A- 2 956 281
- US-B1- 6 479 140

## Description

### Field of the invention

The present invention relates to radar absorbing materials (RAM) used in the construction of composite structures such as wind turbine blades. In particular, the present invention relates to sandwich panel cores incorporating RAM, and to composite structures incorporating such cores.

### Background

It is desirable to introduce radar absorbing material (RAM) into composite structures such as wind turbine components, for example wind turbine blades. One reason for this is that rotating blades have a radar signature similar to that of aircraft, which can make it difficult for air traffic control and other radar operators to distinguish between aircraft and wind turbines. Incorporating RAM into such structures ensures that the resulting structure has a reduced radar signature that can be distinguished easily from aircraft, and which creates less unwanted events (also known as 'clutter') on the screen of the radar operator.

Existing wind turbine blades are generally manufactured from reinforced composite materials. A typical blade is fabricated in two shells, which are subsequently united to form a single hollow unit. The shells include at particular locations sandwich panel regions having a core of lightweight material such as foam or balsa wood.

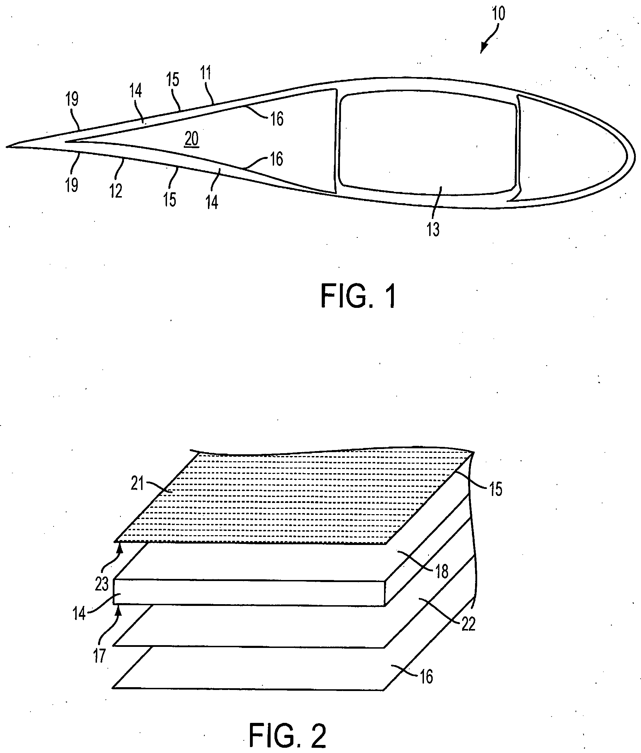

By way of background, Figure 1 shows a cross section of a wind turbine blade 10. The blade 10 is constructed from two aerodynamic shells, upper shell 11 and lower shell 12 which are formed from a glass fibre cloth and resin composite. The shells 11 and 12 are supported by a tubular structural spar 13 formed from glass fibre and carbon fibre.

The spar 13 forms the primary strengthening structure of the blade 10. At the rear of each shell 11 and 12 towards the trailing edge of the blade 10, the shells are formed with a sandwich panel construction, in which a foam core 14 is positioned between sheets or `skins' of glass fibre 15 and 16. The foam core 14 is used to separate the glass fibre skins 15 and 16 to keep the shell stiff in this region.

Figure 2 shows an exploded sectional perspective view of part of a sandwich panel region of the blade 10. The sandwich panel comprises the foam core 14, which has an inner surface 17 and an outer surface 18. The core 14 is disposed between the inner skin 16 and the outer skin 15. The outer surface 18 of the core 14 and the outer skin 15 face towards an exterior surface 19 (Figure 1) of the blade 10, whilst the inner surface 17 of the core 14 and the inner skin 16 face towards an interior region 20 (Figure 1) of the blade 10.

Referring still to Figure 2, an impedance layer 21 is provided on the outer skin 15, and a conductive ground plane 22, which functions as a radar reflecting layer, is provided between the core 14 and the inner skin 16. The foam core 14 serves as a dielectric layer between the ground plane 22 and the impedance layer 21.

In this example, the impedance layer 21 is a 'circuit analogue' (CA) layer, which comprises a carbon-ink circuit printed on an inner surface 23 of the outer skin 15. The carbon-ink circuit is represented by the array of dashes in Figure 2. For the avoidance of doubt, the outer skin 15 has been made transparent in Figure 2 so that the CA layer 21 can be seen; in reality, the CA layer 21 would not be visible through the outer skin 15. The CA layer 21 forms a radar absorbing circuit in combination with the ground plane 22. When radar waves are incident upon the blade 10, the combination of the CA layer 21 and the ground plane 22 act to absorb the radar waves so that they are not reflected back to the radar source. In other examples, an otherwise resistive layer may be used in place of the CA layer 21.

Different regions of a wind turbine blade are subject to different forces. Consequently, sandwich panels at different locations within the blade structure may require different core thicknesses. Typically, the core thickness ranges from 5 mm to 45 mm.

The separation between the impedance layer 21 and the ground plane 22 is a key parameter for radar absorption performance, and must be carefully controlled to achieve a blade 10 having the desired absorption properties. Such careful control of the separation of these layers is made more difficult by the varying geometry of the blade 10, specifically the abovementioned variation in core thickness. Theoretical calculations and experimental trials have shown that sandwich panels having a core thickness between approximately 35 mm to 45 mm cannot be turned into high performance RAM using CA or resistive layers and a ground plane arranged as shown in Figure 2.

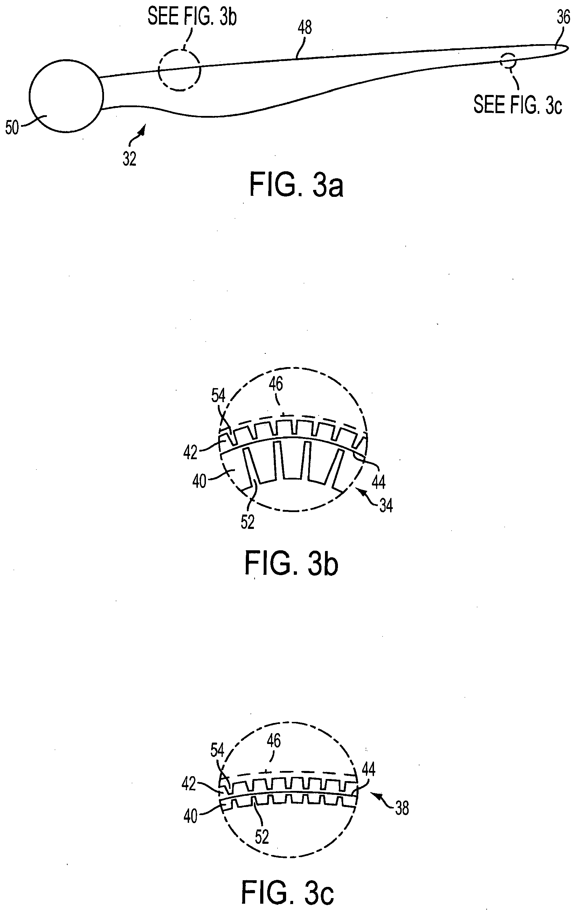

A split core arrangement that provides consistent radar absorption performance in structures where core thickness varies is described in WO2010/122351 and WO2010/122352, which belong to the state of the art according to article 54 (3) EPC. The split core divides the thickness of the core between inner and outer core layers disposed about an intermediate ground plane. An example of such a split core, and its incorporation within a wind turbine blade, will now be described briefly by way of background to the present invention, with reference to Figures 3a to 3c.

Figure 3a is a plan view of a wind turbine blade 30 of sandwich panel construction and incorporating a split core; Figure 3b is an enlarged sectional view of a region close to the root 32 of the blade 30, at which point the sandwich panel has a relatively thick core 34; and Figure 3c is an enlarged sectional view of a region close to the tip 36 of the blade 30, at which point the sandwich panel has a relatively thin core 38.

Referring to Figures 3b and 3c, the split core 34, 38 comprises inner and outer core layers 40 and 42 respectively. A ground plane 44 in the form of a layer of carbon veil is located between the inner and outer core layers 40, 42, and the three layers 40, 42, 44 are bonded together by a suitable adhesive. The split core 34, 38 is disposed inboard of a CA impedance layer 46, which is provided on an outer skin 48 of the blade 30.

The thickness of the outer core layer 42, which defines the separation between the impedance layer 46 and the ground plane 44 is the same in both Figures 3b and 3c, whilst the thickness of the inner core layer 40 is different. The inner core layer 40 is thicker in Figure 3b, i.e. closer to the hub 50, than in Figure 3c, i.e. closer to the tip 36. Since the thickness of the outer core layer 42 remains uniform across the blade 30, a single design of CA layer 46 may conveniently be utilised across the blade 30 providing that the composition of the outer skin 48 is substantially constant across the blade 30. The thickness of the inner core layer 40 does not affect RAM performance, and so this may be chosen to provide the required overall core thickness of the sandwich panel in accordance with the structural requirements of the blade 30 at the specific location of the sandwich panel within the composite structure.

Sandwich panel cores may include a chamfer along one or more edges to avoid stress concentrations from occurring in a laminate structure. The radar absorption performance of single-core arrangements, such as that shown in Figure 2, tends to be impaired at core chamfers, whereas split-core arrangements, such as those shown in Figures 3b and 3c, perform considerably better for reasons that will now be described with reference to Figures 4a and 4b.

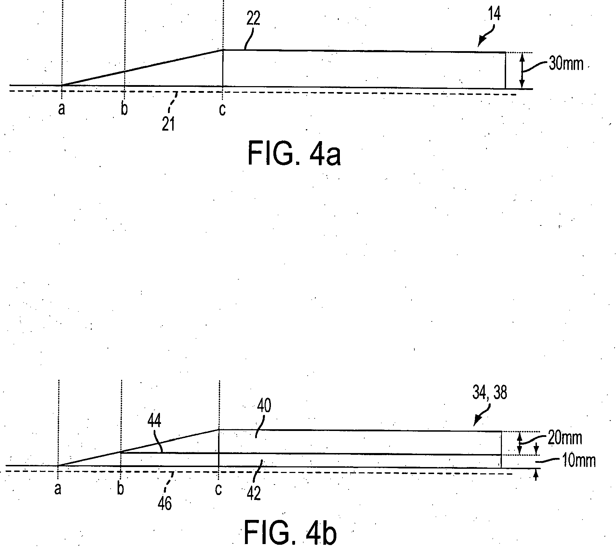

Figure 4a shows a chamfered single-layer core 14 of the type shown in Figure 2, having a thickness of 30 mm and being disposed between an impedance layer 21 and a ground plane 22. Figure 4b shows a chamfered split core 34, 38 of the type shown in Figures 3b and 3c, having an inner core layer 40 that is 20 mm thick and an outer core layer 42 that is 10 mm thick. A ground plane 44 is embedded within the split core 34, 38, between the inner and outer core layers 40, 42, and the split core 34, 38 is located adjacent an impedance layer 46 such that the outer core layer 42 is between the impedance layer 46 and the ground plane 44.

Generally, a reduction in radar absorption performance occurs when the distance between the impedance layer 21, 46 and the ground plane 22, 44 changes from the distance for which the RAM is optimised. In the case of the single-layer core 14 of Figure 4a, the separation between the impedance layer 21 and the ground plane 22 changes along the entire length of the core chamfer, i.e. between points a and c on Figure 3a. However, in the case of the split core of Figure 4b, the separation between the impedance layer 46 and the ground plane 44 remains constant along the majority of the length of the chamfer, i.e. between points b and c in Figure 4b. The ground plane 44 terminates at point b, so performance is reduced only at the extreme end of the chamfer, i.e. between points a and b in Figure 4b, rather than along the entire length of the chamfer, i.e. between points a and c, as is the case for the core 14 in Figure 4a.

Referring again to Figures 3b and 3c, it should be noted that the split core 34, 38 includes several parallel siits: a first plurality of slits 52 is provided in the inner core layer 40 and a second plurality of slits 54 is provided in the outer core layer 42. These slits 52, 54 increase the flexibility of the core 34, 38 and enable the core 34, 38 to drape to conform to the required curvature of the blade shell. To avoid disrupting RAM performance, the slits 52, 54 do not penetrate the ground plane 44. To this end, each slit 52, 54 stops short of the ground plane 44.

Whilst the split cores 34, 38 described above perform well in most cases, in certain situations, for example where high drape is required, these cores have been found to be too rigid. This is due to the rigidity imparted to the core 34, 38 by the embedded ground plane 44 and the adhesive layers that bond the ground plane 44 to the respective core layers 40, 42.

Against this background, it is an object of the present invention to provide a more flexible core capable of consistent RAM performance across a wide range of core thicknesses, including relatively thick cores.

EP0742095 describes a composite structure configured to absorb and dissipate electromagnetic radiation power, and the composite structure is formed from layers of dielectric material and radar absorbing layers.

### Summary of the invention

According to the present invention there is provided a composite structure in accordance with claim 1.

There is provided a composite structure of sandwich panel construction and incorporating radar absorbing material (RAM), the composite structure comprising: an impedance layer; and a foam sandwich panel core having a first core layer and a second core layer, the first core layer comprising a dielectric foam material and being located between the second core layer and the impedance layer; wherein the second core layer is a radar reflecting ground plane comprising an electrically conductive foam material.

The foam core is preferably of unitary construction. The first and second core layers are preferably joined together without intermediate layers. Advantageously, the first and second core layers may be joined together without the use of adhesive. For example, in preferred embodiments of the invention, the first and second core layers are both foam layers that are thermally bonded together. The absence of adhesive and the absence of a solid layer such as a carbon layer at the interface between the first and second core layers results in a core that is more flexible than the split cores described by way of background.

The foam material comprising the ground plane may include any suitable electrically conductive material, for example carbon or iron. The electrically conductive material is preferably in the form of particles, for examples particles of carbon or iron. Preferably the electrically conductive material is carbon, and more preferably it is carbon black, which is relatively inexpensive. Foam containing carbon may be referred to herein as 'carbon-loaded' foam.

Carbon-loaded foam is known for use as a radar absorbing material. For example, anechoic chambers utilise pyramids of carbon-loaded foam to absorb radar signals. Also, graded absorbers are known, which comprise a series of layers of carbon-loaded foam, with each layer comprising an increasing proportion of carbon. Graded absorbers are backed by a conductive ground plane in the form of a metal sheet. In these prior art examples, the carbon loaded foam acts as the radar absorbing medium, but does not act as the ground plane reflector as is the case for the present invention

The core layers may be formed from open or closed cell structured foam or syntactic foam. Preferably the layers are formed from polyethylene terephthalate (PET) or polyvinyl chloride (PVC) foam. Preferably the first core layer does not include electrically conductive material.

The impedance layer is preferably disposed close to the outer surface of the composite structure. The impedance layer may be provided directly on an outer surface of the first core layer. Alternatively, the impedance layer may be otherwise embedded within the composite structure. For example, the impedance layer may be providing on a layer of glass-fibre fabric prior to incorporating the fabric into the composite structure.

The impedance layer may be a 'circuit analogue' (CA) layer, which comprises an array of elements, such as monopoles, dipoles, loops, patches or other geometries provided on a suitable substrate, for example a glass-fibre cloth. The elements are made from a material that has controlled high frequency resistance. The element material and the geometry of the array elements are designed such that the impedance layer exhibits a chosen high frequency impedance spectrum. The impedance spectrum is chosen such that the impedance layer and the ground plane form a radar absorbing circuit in the composite structure. Different impedance spectra are required for different composite structures, for example having different core thicknesses. Alternatively, the impedance layer may be a resistive layer of a type commonly used in RAM.

In a similar way to the split cores described above by way of background, the thickness of the core is divided between the first and second core layers. The thickness of the first core layer is selected in accordance with the specific design of the impedance layer and the required RAM properties. The thickness of the second core layer does not affect RAM performance, and so the thickness of this layer may be selected in accordance with the required structural properties of the sandwich panel. The thickness of the first core layer is preferably substantially uniform across the composite structure, whilst the thickness of the second core layer may vary.

As the thickness of the first core layer may remain the same for all core thicknesses, consistent radar absorption performance can be achieved across an entire composite structure. Furthermore RAM design is less constrained by pre-determined core thicknesses. Functionality is improved because the split core design has consistent RAM performance across all core thicknesses.

The core may comprise additional core layers. For example, the second core layer, which forms the ground plane, may be located between the first core layer and a third core layer. In this way, the total thickness of the core is divided over three core layers. This allows the second core layer to be made relatively thin, which may provide a cost saving because it reduces the amount of core material containing electrically conductive material. In this configuration, the second core layer may be of substantially uniform thickness across the core, whilst the thickness of the third core layer may vary.

The thickness of the third core layer, which may be of relatively inexpensive core material, can be selected to provide the required overall core thickness. The third core material is preferably foam. Preferably all core layers are made from the same type of foam. Preferably the third core layer does not contain electrically conductive material. In the same way as described above, the various core layers may be bonded together without intermediate layers, and/or without adhesive, for example the layers may be thermally bonded. In this way, having additional core layers does not increase the rigidity of the core, so flexibility is maintained. It will be appreciated that further core layers may be provided if required.

The core may be used in prepreg or resin infusion moulding, or in other compatible moulding schemes. For application in a wind turbine blade, the thickness of the first core layer is typically in the range of 10 to 15 mm and the combined thickness of the second and any further core layers is typically in the range of 5 to 35 mm. These thicknesses are suitable for absorbing aviation radar signals in the 1 to 3 gigahertz (GHz) range. However, it will be appreciated that different thicknesses may be required in order to absorb higher or lower frequencies. The split core design enables RAM to be incorporated in relatively thick cores, where using a single-layer core of equivalent thickness would result in poor RAM performance.

For increased flexibility/drapability, a plurality of drape-promoting formations may be provided in the core. The drape-promoting formations are preferably in the form of slits. The slits preferably extend through the entire thickness of the second core layer. Preferably the slits extend at least partially through the thickness of the first core layer. The slits may be provided with or without removal of material from the core layers.

Whilst it was previously thought that penetrating the ground plane would impair its performance as a RAM reflector, it has now been discovered that having a discontinuous ground plane does not necessarily result in impaired performance. For example, through suitable choice of the slit sizes and positions, the ground plane can form a frequency selective surface (FSS) optimised to reflect radar waves of a particular frequency.

The slits may have a V-shaped cross section (otherwise referred to herein as a 'V-section') or a cross-section that otherwise tapers. This may be desirable for preventing excessive resin ingress for a given drapability. For example, the movement capability of a V-section slit is similar to the movement capability of a parallel-sided slit having a slit opening of equivalent size. However, the volume of the V-section slit will be lower than the parallel-sided slit and so resin ingress is lower in the V-shaped slit whilst drapability of the core is similar.

Aside from providing a more flexible core and a FSS, another advantage of the discontinuous second core layer is that it does not interfere with lightning protection systems, which are commonly found in modern wind turbine blades. Prior art conductive ground planes comprise a continuous layer of conductive material, such as carbon. This tends to reduce the electric field around the lightning receptors in wind turbine blades, which can impair the performance of the receptors and may ultimately lead to the blades sustaining damage from a lightning strike. The slits through the second core layer in the present invention interrupt the conductivity of this layer and result in a second layer that comprises a plurality of adjacent, but electrically isolated elements. Experimental tests have shown that an interrupted ground plane does not reduce or otherwise interfere with the electric field around lightning receptors in the same way as a continuous conductive ground plane would. Hence the cores of the present invention may be more compatible with lightning protection systems.

The core may be in the form of discrete panels or sheets. The edges of the panels or sheets may be chamfered to provide chamfered joints between panels. Benefits of the chamfered edges are particularly acute when there is high drape. The split core design of the present invention results in improved RAM performance at core chamfers when compared to prior art single-layer cores, for the reasons described above with reference to Figures 4a and 4b.

Parallel slits may be provided in the core layers to facilitate draping in a single direction. Alternatively, the slits may intersect with one another, for example in a criss-cross pattern, to facilitate draping in more than one direction.

In examples of the invention described herein, the composite structure forms part of a wind turbine blade. Accordingly the inventive concept encompasses a wind turbine blade of sandwich panel construction and incorporating radar absorbing material (RAM), the blade comprising: an impedance layer; and a foam sandwich panel core, the core comprising a first core layer and a second core layer, wherein the first core layer is a dielectric foam material and the second core layer is a radar reflecting ground plane comprising an electrically conductive foam material.

It will be appreciated that the optional and/or preferred features described above apply equally when the composite structure is a wind turbine.

The inventive concept also includes a wind turbine having such a blade, and a wind farm comprising one or more such wind turbines.

### Brief description of the drawings

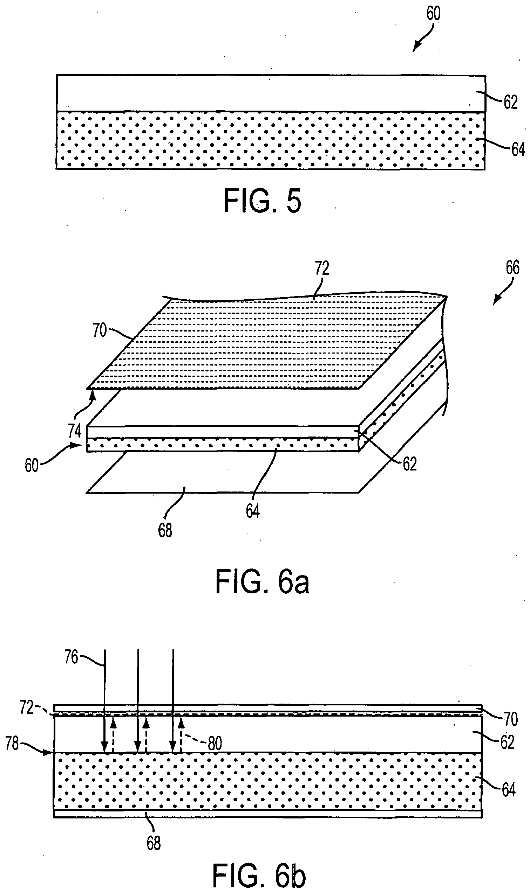

Reference has already been made to Figures 1 to 4 of the accompanying drawings in which:
Figure 1 is a cross section of a wind turbine blade of sandwich panel construction;
Figure 2 is an exploded sectional perspective view of a sandwich panel having a radar-absorbing construction and incorporated in the wind turbine blade of Figure 1;
Figure 3a is a plan view of a wind turbine blade of sandwich panel construction and comprising a split core of the type described in WO2010/122351 and
   WO2010/122352;
Figure 3b is an enlarged sectional view of a region close to the root of the blade, at which point the sandwich panel has a relatively thick core;
Figure 3c is an enlarged sectional view of a region close to the tip of the blade, at which point the sandwich panel has a relatively thin core;
Figure 4a is a side view of a single core of the type shown in Figure 2 and having a chamfered edge; and
Figure 4b is a side view of a split core of the type shown in Figures 3b and 3c and having a chamfered edge.
   In order that the present invention may be more readily understood, reference will now be made, by way of example, to Figures 5 to 10, in which:
Figure 5 is a schematic cross-sectional side view of a core in accordance with a first embodiment of the present invention;
Figure 6a is an exploded sectional perspective view of a sandwich panel incorporating the core of Figure 5 and having an impedance layer provided on an outer core layer;
Figure 6b is a schematic cross-sectional side view of the sandwich panel of Figure 6a, showing the reflection and absorption of incident radar signals;

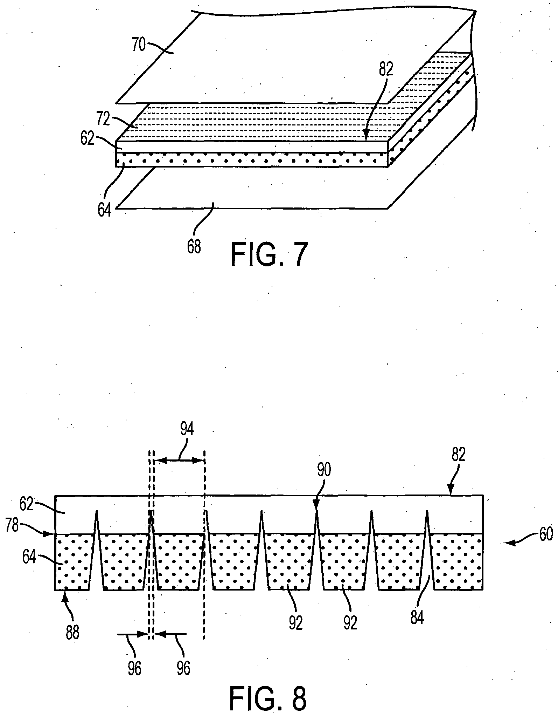

Figure 7 is an exploded sectional perspective view of a sandwich panel incorporating the core of Figure 5 and having an impedance layer provided on a surface of the core;
Figure 8 shows the core of Figure 5 provided with slits to promote draping;

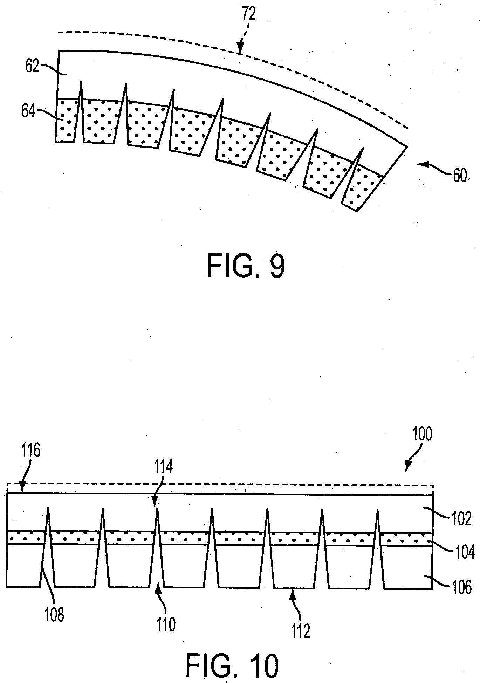

Figure 9 shows the core of Figures 8 in a draped configuration; and
Figure 10 shows a core in accordance with a second embodiment of the present invention.

### Detailed description

Figure 5 shows a core 60 in accordance with a first embodiment of the present invention. The core 60 comprises a first core layer 62 and a second core layer 64, each made of polyethylene terephthalate (PET) or polyvinyl chloride (PVC) foam. The two core layers 62, 64 are thermally bonded together, and hence form a unitary structure without adhesive being required between the layers.

The PET or PVC foam comprising the second core layer 64 is impregnated with particles of carbon black. This 'carbon-loaded' foam is electrically conductive, and serves as a radar-reflecting ground plane when the core 60 is incorporated within a composite structure of sandwich panel construction, as will now be described with reference to Figures 6a and 6b.

Referring to Figure 6a, this shows a sandwich panel 66 in exploded form and incorporating the core 60 of Figure 5. The sandwich panel 66 comprises an inner skin 68 and an outer skin 70, each of glass-fibre composite construction. The core 60 is disposed between the inner and outer skin 68, 70 and oriented such that the first core layer 62 is adjacent the outer skin 70 and the second core layer 64 is adjacent the inner skin 68. The sandwich panel 66 may form part of a composite structure, for example part of a wind turbine blade shell as shown in Figure 1. When incorporated within a wind turbine blade shell, the outer skin 70 faces an exterior surface of the blade, and the inner skin 68 faces an interior region of the blade.

A circuit analogue (CA) impedance layer 72 comprising a carbon-ink circuit is provided on an inner surface 74 of the outer skin 70. The CA layer 72 is represented by the array of dashes in Figure 6a. For the avoidance of doubt, the outer skin 70 has been made transparent in Figure 6a so that the CA layer 72 can be seen; in reality, the CA layer 72 would not be visible through the outer skin 70. The first core layer 62 serves as a dielectric layer between the impedance layer 72 and the ground plane, which is provided by the carbon-loaded foam of the second core layer 64.

Referring now to the side view of Figure 6b, incoming radar signals 76, represented by solid arrows, are incident upon the outer skin 70, and hence upon the CA layer 72. These radar signals 76 penetrate the CA layer 72 and are reflected at the interface 78 between the first and second core layers 62, 64, as represented by the dashed arrows 80. Reflection at the interface 78 between the first and second core layers 62, 64 is caused by the carbon-loaded foam of the second core layer 64 functioning as the conductive ground plane. The combination of the CA layer 72 and the conductive ground plane act to absorb the radar signals 76 in a manner known in the art, so that these signals are not reflected back to the radar source, or are at least greatly attenuated.

Figure 7 shows a variant of the sandwich panel 66 of Figure 6a, in which the CA impedance layer is provided directly on an outer surface 82 of the first core layer 62 instead of being provided on the outer skin 70.

Referring now to Figure 8, a plurality of parallel slits 84 are provided in the core 60 of Figure 5 to promote draping so that the core 60 may conform to a curvature of a composite structure such as a wind turbine blade. Each slit 84 is V-shaped in cross section, and tapers inwardly from an open end 86 at an inner surface 88 of the second core layer 64 to a closed end 90 that is within the first core layer 62 and spaced apart from the outer surface 82 of the first core layer 62. Referring to Figure 9, this shows the core 60 in a draped configuration adjacent the CA layer 72 in a composite structure.

The absence of a carbon layer and the absence of adhesive layers between the first and second core layers 62, 64 mean that the core 60 of the present invention is more flexible than the split cores 34, 38 described above by way of background. Hence the core 60 of the present invention is suitable for incorporation into regions of a composite structure where high levels of draping are required.

Referring again to Figure 8, once the slits 84 have been cut through the core 60, the second core layer 64 comprises a series of adjacent strips 92 of carbon-loaded foam. In this example, the dimensions of the slits 84 are chosen such that each strip 92 of carbon-loaded foam has a width of approximately 40 mm at the interface 78 between the first and second core layers 62, 64, as represented by arrow 94, and such that the separation between adjacent strips at the interface 78 is approximately 2-3 mm, as indicated by the arrows 96. This configuration of slits 84 results in a frequency selective surface (FSS) that acts as an efficient reflector of radar waves having a frequency of 3GHz, which is typical of air-traffic control radar.

The slits 84 also ensure that adjacent strips 92 of carbon-loaded foam do not touch, even with typical degrees of drape, and hence are electrically isolated from one another. This disrupts the conductivity of the ground plane and provides improved compatibility with lightning protection systems, such as those incorporated in modern wind turbine blades.

It will be appreciated that the benefits of a split core, which were described by way of background with reference to Figure 3 apply equally to the cores 60 of the present invention. Hence, a single design of CA layer 72 may be employed irrespective of the total core thickness, because the thickness of the first core layer 62 may be kept uniform across a composite structure such as a wind turbine blade, with the thickness of the second core layer 64 varying in accordance with structural requirements. This ensures that the distance between the impedance layer 72 and the ground plane at the interface 78 between the first and second core layers 62, 64 is kept constant, whilst allowing the total core thickness to vary in accordance with the structural requirements of the blade or other composite structure. In addition, the cores 60 of the present invention have increased performance at core chamfers, for the same reasons as described above in relation to Figures 4a and 4b.

As mentioned previously, reflection of incoming radar signals 76 (Figure 6b) occurs at the interface 78 between the first and second core layers 62, 64. This means that the carbon-loaded foam of the second core layer 64 can be made relatively thin without compromising its performance as a ground plane. Cost savings may be realised by having a relatively thin carbon-loaded foam layer 64 as will now be described with reference to Figure 10.

Referring to Figure 10, this shows a core 100 in accordance with a second embodiment of the present invention. The core 100 comprises a first core layer 102, a second core layer 104, and a third core layer 106, each made of PET or PVC foam. The three core layers 102, 104, 106 are thermally bonded together, and hence form a unitary structure without adhesive being required between the layers. Parallel V-section slits 108 are provided in the core 100. The slits 108 extend through the entire thickness of the second and third core layers 104, 106 and each slit 108 tapers inwardly from an open end 110 at an inner surface 112 of the second core layer 106 to a closed end 114 that is within the first core layer 102 and spaced apart from an outer surface 116 of the first core layer 102. The size of the slits 108, and the spacing between adjacent slits 108, may be chosen to provide a FSS in the same way as described above with reference to Figure 8.

In this embodiment, the second core layer 104 comprises carbon-loaded foam and is located between the first and third core layers 102, 106. The first and third core layers 102, 106 are not carbon-loaded. The carbon-loaded foam provides a conductive ground plane in the same way as described above in relation to the core of Figure 5. In this arrangement, the thickness of the second core layer 104 may be minimised, whilst the thickness of the third core layer 106 may be chosen in accordance with the required structural properties of the composite structure because the thickness of this layer 106 does not affect RAM performance. As carbon-loaded foam is generally more expensive than standard foam, minimising the thickness of the second core layer 104 may provide a substantial cost saving.

It will be appreciated that additional core layers may be provided inboard of the third core layer 106 if required. Since all core layers 102, 104, 106 may be thermally bonded without adhesive being required, having three or more core layers does not reduce the flexibility of the core 100.

The term 'slit' should not be construed in an unduly limiting way. This term may encompass other drape-promoting formations such as discontinuities, grooves, channels, or slots. The term 'radar' here is used for convenience and should be interpreted more generally as relating to microwave radiation.

It will be appreciated that variations or modifications may be made to the specific examples described above without departing from the scope of the present invention as defined by the accompanying claims.

## Claims

1. A composite structure of sandwich panel construction, configured to absorb microwave radiation, comprising a foam core (60), the core comprising a first core layer (62) and a second core layer (64), wherein the first core layer is a dielectric foam material and the second core layer is a radar reflecting ground plane comprising an electrically conductive foam material;
wherein the composite structure includes an impedance layer (72) and the core (60) is arranged such that the first core layer (62) is between the impedance layer (72) and the second core layer (64) so that the impedance layer and the second core layer form radar absorbing material.

2. The composite structure of Claim 1, wherein the foam material comprising the second core layer (64) contains particles of carbon.

3. The composite structure of Claim 1 or Claim 2, wherein the first (62) and second (64) core layers are joined together without intermediate layers.

4. The composite structure of any preceding claim, wherein the first (62) and second (64) core layers are joined together without adhesive.

5. The composite structure of any preceding claim, wherein the first (62) and second (64) core layers are thermally bonded together.

6. The composite structure of any preceding claim, wherein the second core layer (64) is discontinuous and comprises a plurality of electrically isolated adjacent elements (92).

7. The composite structure of Claim 6, wherein the electrically isolated adjacent elements (92) form a frequency selective surface.

8. The composite structure of any preceding claim, wherein the core (60) further comprises a plurality of drape-promoting formations (84).

9. The composite structure of Claim 8, wherein the drape-promoting formations are in the form of slits (84) that extend through the entire thickness of the second core layer (64) and at least partially through the thickness of the first core layer (62).

10. The composite structure of any preceding claim, wherein the impedance layer (72) is provided on an outer surface of the first core layer (62).

11. The composite structure of any preceding claim, wherein the thickness of the first core layer (62) is substantially uniform across the composite structure.

12. The composite structure of any preceding claim, wherein the thickness of the second core layer (64) varies across the composite structure to vary the overall thickness of the core.

13. The composite structure of any of claims 1 to 11, in which the core includes a third core layer (106) arranged such the second core layer is between the first and third core layers, wherein the thickness of the third core layer varies across the composite structure.

14. A blade for a wind turbine, the blade comprising the composite structure of any preceding claim.

15. A wind turbine having a blade according to Claim 14, or a wind farm comprising at least one such wind turbine.

## Patentansprüche

1. Verbundstruktur einer Verbundplattenkonstruktion, ausgebildet zum Absorbieren von Mikrowellenstrahlung, umfassend
einen Schaumkern (60), der Kern umfassend eine erste Kernschicht (62) und eine zweite Kernschicht (64), wobei die erste Kernschicht ein dielektrisches Schaummaterial ist und die zweite Kernschicht eine radarreflektierende Grundebene ist, die ein elektrisch leitfähiges Schaummaterial umfasst;
wobei die Verbundstruktur eine Impedanzschicht (72) aufweist und der Kern (60) so angeordnet ist, dass sich die erste Kernschicht (62) zwischen der Impedanzschicht (72) und der zweiten Kernschicht (64) befindet, sodass die Impedanzschicht und die zweite Kernschicht radarabsorbierendes Material bilden.

2. Verbundstruktur nach Anspruch 1, wobei das Schaummaterial, das die zweite Kernschicht (64) umfasst, Kohlenstoffteilchen enthält.

3. Verbundstruktur nach Anspruch 1 oder Anspruch 2, wobei die erste (62) und die zweite (64) Kernschicht ohne Zwischenschichten zusammengefügt sind.

4. Verbundstruktur nach einem der vorhergehenden Ansprüche, wobei die erste (62) und die zweite (64) Kernschicht ohne Klebemittel zusammengefügt sind.

5. Verbundstruktur nach einem der vorhergehenden Ansprüche, wobei die erste (62) und die zweite (64) Kernschicht thermisch miteinander verbunden sind.

6. Verbundstruktur nach einem der vorhergehenden Ansprüche, wobei die zweite Kernschicht (64) diskontinuierlich ist und eine Vielzahl von elektrisch isolierten benachbarten Elementen (92) aufweist.

7. Verbundstruktur nach Anspruch 6, wobei die elektrisch isolierten benachbarten Elemente (92) eine frequenzselektive Oberfläche bilden.

8. Verbundstruktur nach einem der vorhergehenden Ansprüche, wobei der Kern (60) weiterhin eine Vielzahl von Falten fördernden Formationen (84) umfasst.

9. Verbundstruktur nach Anspruch 8, wobei die Falten fördernden Formationen in der Form von Schlitzen (84) vorliegen, die sich durch die gesamte Dicke der zweiten Kernschicht (64) und zumindest teilweise durch die Dicke der ersten Kernschicht (62) erstrecken.

10. Verbundstruktur nach einem der vorhergehenden Ansprüche, wobei die Impedanzschicht (72) an einer Außenfläche der ersten Kernschicht (62) vorgesehen ist.

11. Verbundstruktur nach einem der vorhergehenden Ansprüche, wobei die Dicke der ersten Kernschicht (62) über die Verbundstruktur im Wesentlichen gleichförmig ist.

12. Verbundstruktur nach einem der vorhergehenden Ansprüche, wobei sich die Dicke der zweiten Kernschicht (64) über die Verbundstruktur verändert, um die Gesamtdicke des Kerns zu verändern.

13. Verbundstruktur nach einem der Ansprüche 1 bis 11, wobei der Kern eine dritte Kernschicht (106) aufweist, die so angeordnet ist, dass sich die zweite Kernschicht zwischen ersten und der dritten Kernschicht befindet, wobei die Dicke der dritten Kernschicht sich über die Verbundstruktur verändert.

14. Blatt für eine Windturbine, das Blatt umfassend die Verbundstruktur nach einem der vorhergehenden Ansprüche.

15. Eine Windturbine mit einem Blatt nach Anspruch 14, oder ein Windpark umfassend zumindest eine solche Windturbine.

## Revendications

1. Structure composite de construction de panneaux sandwich configuré pour absorber un rayonnement de microondes, comprenant une âme en mousse (60), l'âme comprenant une première couche d'âme (62) et une deuxième couche d'âme (64), dans laquelle la première couche d'âme est un matériau en mousse diélectrique et la deuxième couche d'âme est un plan de masse réfléchissant les ondes radar comprenant un matériau en mousse électroconducteur ;
dans laquelle la structure composite comporte une couche d'impédance (72) et l'âme (60) est agencée de sorte que la première couche d'âme (62) se situe entre la couche d'impédance (72) et la deuxième couche d'âme (64) de sorte que la couche d'impédance et la deuxième couche d'âme forment le matériau absorbant les ondes radar.

2. Structure composite selon la revendication 1, dans laquelle le matériau en mousse comprenant la deuxième couche d'âme (64) contient des particules de carbone.

3. Structure composite selon la revendication 1 ou 2, dans laquelle la première (62) et deuxième (64) couche d'âme sont jointes ensemble sans couches intermédiaires.

4. Structure composite selon l'une quelconque des revendications précédentes, dans laquelle la première (62) et deuxième (64) couche d'âme sont jointes ensemble sans adhésif.

5. Structure composite selon l'une quelconque des revendications précédentes, dans laquelle la première (62) et deuxième (64) couche d'âme sont liées thermiquement ensemble.

6. Structure composite selon l'une quelconque des revendications précédentes, dans laquelle la deuxième couche d'âme (64) est discontinue et comprend une pluralité d'éléments adjacents isolés électriquement (92).

7. Structure composite selon la revendication 6, dans laquelle les éléments adjacents isolés électriquement (92) forment une surface sélective de fréquence.

8. Structure composite selon l'une quelconque des revendications précédentes, dans laquelle l'âme (60) comprend en outre une pluralité de formations favorisant le drapé (84).

9. Structure composite selon la revendication 8, dans laquelle les formations favorisant le drapé se présentent sous forme de fentes (84) qui s'étendent à travers l'épaisseur entière de la deuxième couche d'âme (64) et au moins partiellement à travers l'épaisseur de la première couche d'âme (62).

10. Structure composite selon l'une quelconque des revendications précédentes, dans laquelle la couche d'impédance (72) est prévue sur une surface extérieure de la première couche d'âme (62).

11. Structure composite selon l'une quelconque des revendications précédentes, dans laquelle l'épaisseur de la première couche d'âme (62) est sensiblement uniforme dans la structure composite.

12. Structure composite selon l'une quelconque des revendications précédentes, dans laquelle l'épaisseur de la deuxième couche d'âme (64) varie dans la structure composite pour faire varier l'épaisseur globale de l'âme.

13. Structure composite selon l'une quelconque des revendications 1 à 11, dans laquelle l'âme comporte une troisième couche d'âme (106) agencée de sorte que la deuxième couche d'âme se situe entre les première et troisième couches d'âme, dans laquelle l'épaisseur de la troisième couche d'âme varie dans la structure composite.

14. Pale d'éolienne, la pale comprenant la structure composite selon l'une quelconque des revendications précédentes.

15. Eolienne comportant une pale selon la revendication 14, ou parc éolienne comprenant au moins une telle éolienne.
